# EUROPÄISCHE PATENTSCHRIFT

(11) **EP 2 272 154 B1**
(45) Veröffentlichungstag und Bekanntmachung des Hinweises auf die Patenterteilung: **16.01.2019**
(21) Anmeldenummer: 09734806.4
(22) Anmeldetag: 22.04.2009
(51) Int. Cl.: H02K 7/116, H02K 11/02, B60S 1/08

(54) **ANTRIEBSVORRICHTUNG VON FAHRZEUGAGGREGATEN**
DRIVING DEVICE FOR VEHICLE UNITS
DISPOSITIF D'ENTRAÎNEMENT DE GROUPES D'UN VÉHICULE

(30) Priorität: 24.04.2008 DE 102008001359
(43) Veröffentlichungstag der Anmeldung: 12.01.2011
(73) Patentinhaber: Robert Bosch GmbH, 70442 Stuttgart (DE)
(72) Erfinder: LAUK, Detlef, 77871 Renchen (DE)
(86) Internationale Anmeldenummer: PCT/EP2009/054832
(87) Internationale Veröffentlichungsnummer: WO 2009/130249

(56) Entgegenhaltungen:
- EP-A- 1 696 536
- EP-A2- 1 251 604
- DE-A1- 19 805 185
- GB-A- 2 140 218

## Beschreibung

### Stand der Technik

Die Erfindung betrifft eine Antriebsvorrichtung von Fahrzeugaggregaten, beispielsweise einer Front- oder Heckscheibenwischervorrichtung.

Bei aus dem Stand der Technik bekannten Elektromotoren ist ein Bürstenhalter in der Regel in einem Polgehäuse des Elektromotors untergebracht. In anderen Ausführungsformen ist der Bürstenhalter im Getriebegehäuse mehr oder weniger metallisch ungeschirmt vorgesehen. In beiden Fällen verbleibt der Bauraum um den Bürstenhalter ungenutzt und trägt außerdem zu einer Vergrößerung des Motors bei.

Die Offenlegungsschrift EP 1 696 536 zeigt eine Scheibenwischvorrichtung mit einem Elektromotor umfassend ein Polgehäuse aus Stahl und einem Getriebegehäuse aus einer Aluminiumlegierung.

Die Offenlegungsschrift GB 2 140 218 zeigt ein Getriebegehäuse und ein Polgehäuse für eine Scheibenwischvorrichtung.

Die Offenlegungsschrift DE 198 05 185 A1 zeigt eine Antriebsvorrichtung zum Verstellen eines Schiebedachs eines Fahrzeugs.

Die Offenlegungsschrift EP 1 251 604 A2 zeigt einen Fahrzeugaktor mit einem Elektromotor und einem Getriebegehäuse. Im Getriebegehäuse ist eine Aufnahme zur Aufnahme eines Bürstenhalters und einer Bürste vorgesehen. Die Erfindung ist eine Antriebsvorrichtung für ein Fahrzeugaggregat gemäss des unabhängigen Anspruchs 1. Weitere Ausgestaltungsformen der Erfindung sind Gegenstand der abhängigen Ansprüche 2 - 6.

Die Antriebsvorrichtung gemäß der Erfindung hat hierbei den Vorteil, dass der Antriebsmotor zumindest teilweise abgeschirmt ist gegen Störungen von außen, wie beispielsweise Radiofrequenzen und der gleichen. Diese Abschirmung wird erzielt, durch die metallische Abschirmung des Polgehäuses bzw. Getriebegehäuses. Dadurch können erhöhte Kundenanforderungen bezüglich Abstrahlung erfüllt werden. Dies ist mit den bisher bekannten zuvor beschriebenen ungeschirmten Antriebsmotoren nicht möglich.

Der Antriebsmotor ist ein Elektromotor, welcher einen Bürstenhalter und Bürstenelemente aufweist. Zur besseren Ausnutzung des Bauraums der Antriebsvorrichtung kann der Bürstenhalter zusätzlich mit einem oder mehreren elektronischen Bauelementen versehen sein, darunter beispielsweise Drosseln, Kondensatoren, Relais usw. um nur einige Beispiele für solche elektrischen Bauelemente zu nennen.

Nach einer Ausführungsform weist der Bürstenhalter wahlweise zusätzlich ein oder mehrere elektronische Bauelemente auf, beispielsweise eine Drossel und/oder einen Kondensator.

Der Bürstenhalter und die Bürstenelemente sind in einer Aufnahme in dem Getriebegehäuse angeordnet. Die Aufnahme ist dabei als eine metallische Abschirmung ausgebildet. Dabei kann die Aufnahme aus Metall bzw. einer Metalllegierung bestehen oder diese aufweisen.

Die Aufnahme ist an ihrer Ober- und/oder Unterseite mit einem Abdeckelement abgedeckt. Das Abdeckelement ist ein metallisches Abdeckelement bzw. besteht aus Metall oder einer Metalllegierung . Zusätzlich kann das Abdeckelement auf der Ober- und/oder Unterseite mit wenigstens einem oder mehreren elektronischen Bauelementen versehen sein, beispielsweise einem Durchführungskondensator Duko usw., um nur ein Beispiel zu nennen.

Hierdurch kann der Bauraum der Antriebsvorrichtung zusätzlich ausgenutzt werden.

Gemäß einer weiteren erfindungsgemäßen Ausführungsform ist das Getriebegehäuse durch einen Getriebedeckel abdeckbar, wobei der Getriebedeckel beispielsweise zur Abschirmung genutzt werden kann, indem er aus Metall oder einer Metalllegierung besteht oder diese aufweist. Grundsätzlich kann der Getriebedeckel aber auch aus Kunststoff gefertigt sein oder diesen zumindest aufweisen.

In einer weiteren erfindungsgemäßen Ausführungsform weist der Getriebedeckel eine Aufnahme auf zur Aufnahme einer Leiterplatte. Die Leiterplatte kann hierbei beispielsweise zumindest teilweise über dem Bürstenhalter und dessen Bürstenelementen angeordnet sein. Dies hat den Vorteil, dass der Bauraum der Antriebsvorrichtung besser ausgenutzt werden kann. In einer anderen Ausführungsform kann das zuvor beschriebene Abdeckelement zwischen der Leiterplatte und dem Bürstenhalter und dessen Bürstenelementen angeordnet werden. Das hat den Vorteil, dass das Abdeckelement beispielsweise aus Metall oder einer Metalllegierung zusätzlich als Kühlfläche dienen kann und ein unerwünschtes Erwärmen der Leiterplatte verhindern kann.

In einer anderen erfindungsgemäßen Ausführungsform ist der Getriebedeckel mit wenigstens eine Steckeranbindung versehen. Dies hat den Vorteil, dass zusätzlich Platz eingespart werden kann und ein kompakter Aufbau der Antriebsvorrichtung erzielt werden kann.

Gemäß einer weiteren Ausführungsform der Erfindung weist das das Getriebegehäuse eine Aufnahme für die Getriebeeinrichtung auf. Die Aufnahme und/oder im Wesentlichen das gesamte Getriebegehäuse kann hierbei beispielsweise aus Metall oder einer Metalllegierung bestehen oder diese aufweisen. Beispielsweise kann das Getriebegehäuse mit den Aufnahmen für die Getriebeeinrichtung, sowie den Bürstenhalter und seine Bürstenelemente als Gussteil ausgebildet werden.

In einer anderen Ausführungsform, nicht Teil der beanspruchten Erfindung, sind der Bürstenhalter und die Bürstenelemente in dem Polgehäuse angeordnet, beispielsweise in einem Statormantel des Antriebsmotors. Dieser Statormantel beispielsweise aus Blech wirkt ebenfalls als eine metallische Abschirmung.
Gemäß der Erfindung kann die Antriebsvorrichtung beispielsweise eine Frontscheibenwischervorrichtung und/oder eine Heckscheibenwischervorrichtung als Fahrzeugaggregat antreiben. Die Erfindung ist jedoch darauf nicht beschränkt sondern kann auch für andere Fahrzeugaggregate eingesetzt werden.
Ausführungsbeispiele der Erfindung werden nachstehend anhand der schematischen Figuren der Zeichnung näher erläutert. Es zeigt:
Fig. 1 eine schematische Explosionsdarstellung einer Antriebsvorrichtung gemäß einem Beispiel zum Verständnis der Erfindung;
Fig. 2 eine schematische Schnittansicht einer Antriebsvorrichtung gemäß einer Ausführungsform der Erfindung;
Fig. 3 ein schematische Perspektivansicht einer Antriebsvorrichtung als weiteres Beispiel, nicht Teil der beanspruchten Erfindung; und
Fig. 4 ein Ausschnitt des Getriebegehäuses der Antriebsvorrichtung gemäß Fig. 3, wobei der Getriebedeckel des Getriebegehäuses entfernt ist.

In den Figuren sind nachfolgend gleiche oder ähnliche Teile mit gleichen Bezugszahlen versehen.

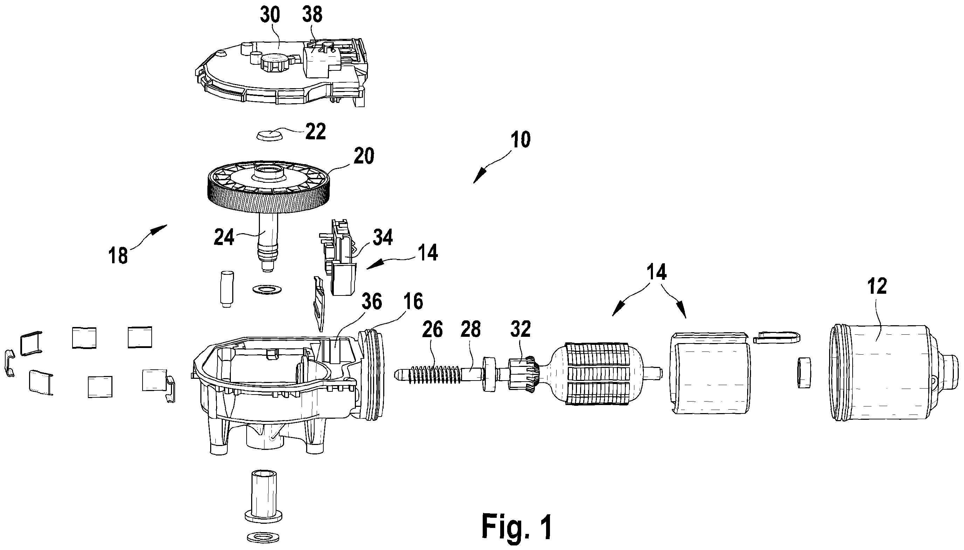

In Fig. 1 ist eine Antriebsvorrichtung gemäss einem Beispiel zum Verständnis der Erfindung in einer Explosionsdarstellung gezeigt. Die Antriebsvorrichtung 10 weist dabei ein Polgehäuse 12 mit einem Antriebsmotor 14 auf, beispielsweise einem Elektromotor. An dem Polgehäuse 12 ist stirnseitig ein Getriebegehäuse 16 befestigt. In dem Getriebegehäuse 16 ist hierbei eine Getriebeeinrichtung 18 angeordnet, die über den Antriebsmotor 14 angetrieben wird. Im vorliegenden Fall, wie er in Fig. 1 gezeigt ist, weist die Getriebeeinrichtung 18 ein Getrieberad 20 bzw. Zahnrad mit einem Gebermagneten 22 und einer Antriebswelle 24 auf. Das Zahnrad 20 ist hierbei mit einem Schneckenrad 26 in Eingriff, das auf einer Ankerwelle 28 des Elektromotors 14 angeordnet ist. Die Antriebswelle 24 des Getrieberads 20 kann mit einem entsprechenden Fahrzeugaggregat (nicht dargestellt) verbunden werden, um dieses anzutreiben. Ein solches Fahrzeugaggregat ist beispielsweise eine Wischereinrichtung bei einem Pkw oder Lkw. Das Getriebegehäuse 16 selbst wird mit einem Getriebedeckel 30 verschlossen.
Der Antriebsmotor 14, hier der Elektromotor, ist in dem Polgehäuse 12 der Antriebsvorrichtung 10 angeordnet. Auf der Ankerwelle 28 des Elektromotors 14 befindet sich ein Kommutator 32. Ein Bürstenhalter 34 und seine Bürstenelemente, beispielsweise Kohlebürsten, sind im vorliegenden Beispiel, wie in Fig. 1 gezeigt ist, in einem Gehäuseabschnitt bzw. einer Aufnahme 36 des Getriebegehäuses 16 angeordnet und wirken in eingebautem Zustand mit dem Kommutator 32 zusammen.

In dem Raum über dem Bürstenhalter 34 und seinen Bürstenelementen ist des Weiteren wenigstens ein Steckerabgang 38 oder Buchsenabgang vorgesehen. Der Steckerabgang 38 ist dabei in dem Getriebedeckel 30 oberhalb des Bürstenhalters 34 und der Bürstenelemente angeordnet.

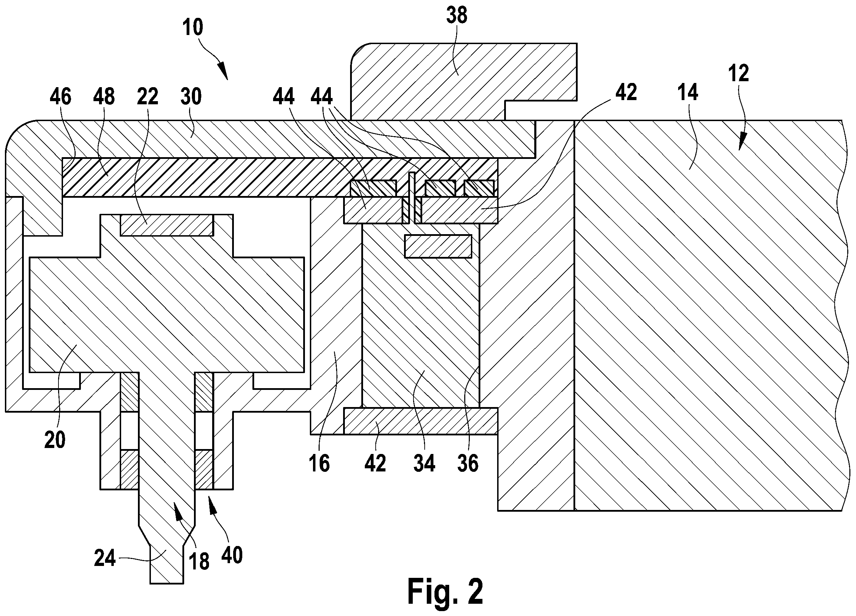

In Fig. 2 ist eine erfindungsgemäße Ausführungsform der Antriebsvorrichtung 10 in einer Schnittansicht dargestellt. Die Antriebsvorrichtung 10 weist ebenfalls ein Polgehäuse 12 auf, in welchem ein Antriebsmotor 14, beispielsweise ein Elektromotor, angeordnet ist. Das Polgehäuse 12 ist wiederum an einem Flanschabschnitt eines Getriebegehäuses 16 befestigt. In dem Getriebegehäuse 16 ist eine Getriebeeinrichtung 18 angeordnet. Im vorliegenden Fall, wie er in Fig. 2 gezeigt ist, weist die Getriebeeinrichtung 18 ein Getrieberad 20 bzw. Zahnrad mit einem Magnetelement bzw. Gebermagneten 22 auf. Über eine mit dem Getrieberad 20 verbundene Antriebswelle 24 können weitere Einrichtungen angetrieben werden, beispielsweise eine Wischeranlage, wie eine Front- bzw. Heckwischeranlage eines Fahrzeugs. Die Antriebswelle 24 ist über eine Lageranordnung 40, beispielsweise bestehend aus zwei Wälzlagern, drehbar in dem Getriebegehäuse 16 gelagert. Die Getriebeeinrichtung 18 bzw. das Getrieberad 20 wird über eine Ankerwelle 28 des Antriebsmotors 14 angetrieben. Neben der Getriebeeinrichtung 18 ist ein Bürstenhalter 34 mit seinen Bürstenelementen in dem Getriebegehäuse 16 angeordnet. Die Bürstenelemente wirken hierbei mit einem Kommutator (nicht dargestellt) des Antriebsmotors 14 zusammen. Das Getriebegehäuse 16 besteht aus Metall bzw. einer Metalllegierung und kann beispielsweise in Form eines Metallgusses hergestellt sein. Das Getriebegehäuse 16 weist zur Unterbringung des Bürstenhalters 34 und seiner Bürstenelemente eine entsprechende Aufnahme 36 bzw. Vertiefung auf. Dabei kann das Getriebegehäuse 16 auf der Ober- und/oder Unterseite im Bereich der Aufnahme 36 für den Bürstenhalter 34 und dessen Bürstenelemente offen ausgebildet sein, zum Einführen dieser Elemente. Dieser offene Bereich kann beispielsweise jeweils mit einem Abdeckelement 42, hier einer Abdeckplatte, beispielsweise aus Metall bzw. einer Metalllegierung abdeckbar ausgebildet sein.

Wie in Fig. 2 gezeigt ist, ist die Aufnahme 36 für den Bürstenhalter 34 und die Bürstenelemente auf der Ober- und Unterseite offen, wobei die Ober- und Unterseite jeweils mit einer Abdeckplatte 42 aus Metall oder einer Metalllegierung verschließbar ist. Durch das metallische Getriebegehäuse 16 bzw. die metallische Aufnahme 36 für die Bürstenelemente und deren Halter 34, sowie durch das Vorsehen von metallischen Abdeckplatten 42 kann eine Art Faradayscher Käfig für die Bürstenanordnung bereitgestellt werden. In der oberen und/oder unteren Abdeckplatte 42 können des Weiteren beispielsweise wenigstens ein oder mehrere elektrische Bauelemente 44, beispielsweise Entstörelemente vorgesehen sein. Als Entstörelement 44 kann beispielsweise ein Durchführungskondensator Duko eingesetzt werden. Darüber hinaus kann der Bürstenhalter 34 mit wenigstens einem oder mehreren sog. EMV Bauteilen versehen sein, sowie wahlweise mit wenigstens einer zusätzlichen Steckverbindung oder Buchsenverbindung. Als EMV Bauteile können beispielsweise Drosseln, Kondensatoren usw. vorgesehen sein.

Das Getriebegehäuse 16 wird mit einem Getriebedeckel 30 verschlossen, wie in Fig. 2 gezeigt ist. Dabei kann auf der Innenseite des Getriebedeckels 30 eine Aufnahme 46 für eine Leiterplatte 48 vorgesehen werden. Die Leiterplatte 48 kann dabei beispielsweise die Steuerelektronik oder Teile der Steuerelektronik für den Antriebsmotor 14 aufweisen.
Auf der Leiterplatte 48 können zusätzlich oder statt der Steuerelektronik des Weiteren elektrische Bauelemente 44, wie beispielsweise Kondensatoren, Spulen, Relais und Transistoren, z.B. Leistungstransistoren, angeordnet sein, sowie Schleifkontaktelemente oder optoelektronische Bauelemente usw.. Die vorliegende Erfindung ist auf die genannten Elemente 44 einschließlich der Elektronik für den Antriebsmotor 14 nicht beschränkt, sondern die Elemente stellen lediglich Beispiele dar, die auf der Leiterplatte 48 vorgesehen werden können.
Wie in Fig. 2 gezeigt ist, kann der Getriebedeckel 30 auch eine Steckeranbindung 38 oder Buchsenanbindung auf seiner Außenseite aufweisen. Der Getriebedeckel 30 kann hierbei ebenfalls aus Metall oder eine Metalllegierung bestehen oder diese aufweisen. Grundsätzlich kann der Getriebedeckel 30 aber auch aus Kunststoff gefertigt sein oder zumindest Teile davon.

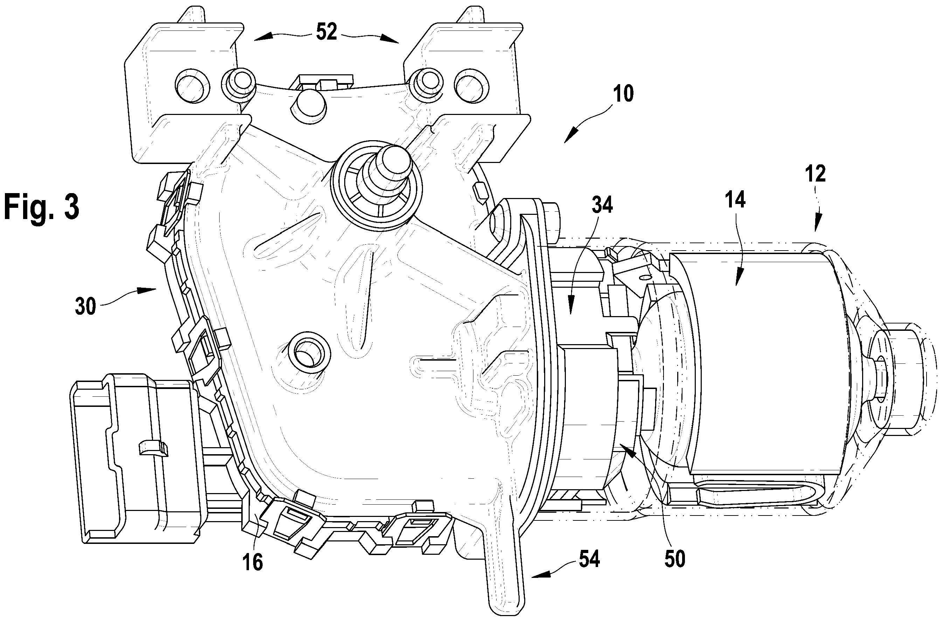

In Fig. 3 ist eine Antriebsvorrichtung 10 als weiteres Beispiel, nicht Teil der beanspruchten Erfindung, dargestellt. Dabei ist das Polgehäuse 12 der Antriebsvorrichtung 10 transparent dargestellt. In dem Inneren des Polgehäuses 12 ist eine Antriebsmotor 14, hier eine Elektromotor, angeordnet. Des Weiteren sind eine Bürstenhalter 34 und seine Bürstenelemente in dem Polgehäuse 12 angeordnet. Dabei bildet ein Rahmen bzw. Mantel 50 eines Stators einen Faradayschen Käfig um den Bürstenhalter 34 und seine Bürstenelemente. Der Mantel 50 ist dabei aus Metall oder eine Metalllegierung bzw. aus Blech und schirmt den Bürstenhalter 34 und dessen Bürstenhalterelemente nach außen ab.

Das Polgehäuse 12 ist, wie in Fig. 3 gezeigt, an einem Flansch eines Getriebegehäuses 16 befestigt, beispielsweise mittels Schrauben. In dem Getriebegehäuse 16 ist eine Getriebeeinrichtung (nicht dargestellt) angeordnet, wie sie beispielsweise anhand der Fig. 1 und 2 zuvor beschrieben wurde. Die Getriebeeinrichtung, die beispielsweise ein Getrieberad, einen Gebermagneten und eine Antriebswelle aufweist, wird über eine Ankerwelle des Antriebsmotors 14 angetrieben. Des Weiteren wird das Getriebegehäuse 16 mittels eines Getriebedeckels 30 verschlossen. Der Getriebedeckel 30 weist auf seiner Außenseite beispielsweise eine Aufnahme 52 auf, zur Befestigung in einem Fahrzeug, sowie einen Haltepunkt 54, zum zusätzlichen Fixieren bzw. Positionieren der Antriebsvorrichtung 10 in einem Fahrzeug.

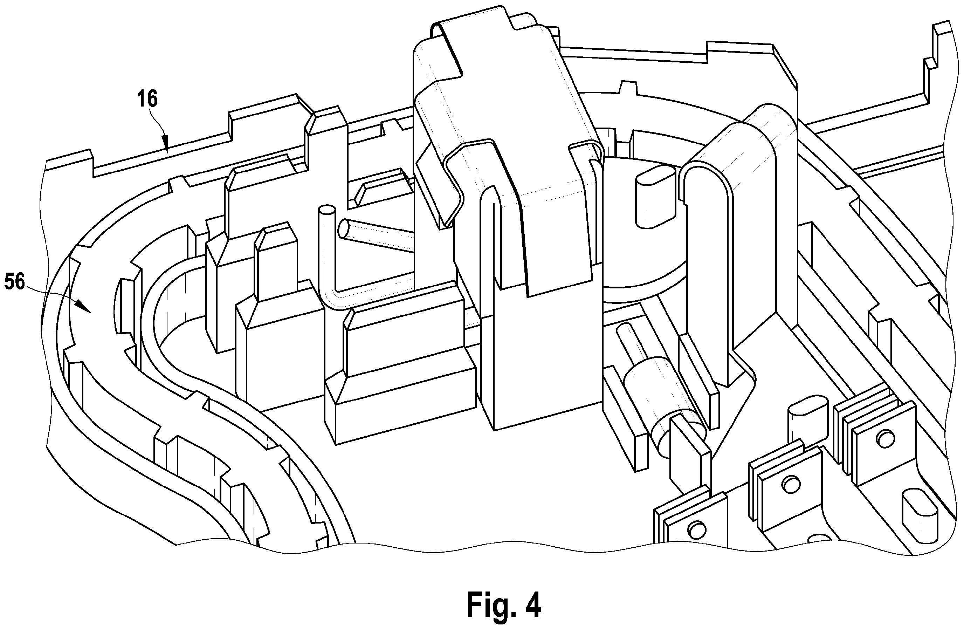

In dem Ausschnitt des Getriebegehäuses 16, wie er in Fig. 4 gezeigt ist, ist der Getriebedeckel entfernt. An dem Getriebegehäuse 16 ist ein Dichtungsgummieelement 56 befestigt bzw. eingelegt, um das Getriebegehäuse 16 vor Verschmutzung zu schützen. Dadurch, dass der Bürstenhalter und seine Bürstenelemente in dem Polgehäuse und nicht in dem Getriebegehäuse 16 angeordnet sind, wie zuvor anhand der Fig. 1 und 2 beschrieben wurde, kann das Getriebegehäuse 16 kompakter gestaltet werden.

Die Erfindung, wie sie zuvor anhand der Fig. 1-3 aufgezeigt wurde, sieht u.a. vor, den Bauraum um den Bürstenhalter zusätzlich funktional zu nutzen, damit der Gesamtaufbau der Antriebsvorrichtung bzw. des Motors verkleinert werden kann. Hierzu kann gemäß der Erfindung der Bauraum um den Bürstenhalter zur Auflage und Kühlung einer Leiterplatte genutzt werden und/oder als ein direkter Abgang für einen Stecker, wie mit Bezug auf die Fig. 1 und 2 beschrieben wurde. Des Weiteren kann gemäß der Erfindung ein einfaches metallisches Abdeckelement bzw. eine metallische Abdeckplatte eingesetzt werden, um den Bürstenhalterbereich in Form einer Art Faradayscher Käfig zu schirmen.

Der Vorteil der Erfindung liegt hierbei darin, dass der Bauraum um den Bürstenhalter genutzt werden kann, indem beispielsweise eine Leiterplatte zumindest teilweise oder vollständig darüber platziert wird. Dabei kann mit einer zusätzlichen Metallabdeckplatte eine Kühlfläche für die Leiterplatte bereitgestellt werden. Alternativ kann beispielsweise bei Motoren mit im Wesentlichen keiner Elektronik auch ein Steckerabgang direkt in dem Bauraum um den Bürstenhalter platziert werden. Dadurch kann der Bauraum insgesamt reduziert werden und damit die Antriebsvorrichtung verkleinert bzw. kompakter gestaltet werden.

Ein weiterer Vorteil der Erfindung liegt darin, dass eine metallische Abschirmung des Bürstenhalterbereichs bereitgestellt wird, so dass eine Art Faradayscher Käfig gebildet wird. Hierdurch können erhöhte Kundenanforderungen erzielt werden, indem der Bürstenhalterbereich abgeschirmt wird gegen die Abstrahlung beispielsweise von Radiofrequenzen bzw. digitalen Radiofrequenzen. Ein anderer Vorteil der Erfindung liegt in den kurzen Verbindungswegen der Bürstenelemente bzw. Kohlebürsten, den Entstörelementen und der Leiterplatte bzw. dem Stecker. Als Entstörelemente können beispielsweise Durchführungskondensatoren in dem jeweiligen Abdeckelement integriert werden. Hierdurch kann der Bauraum besser ausgenutzt werden und dadurch der Bauraum insgesamt verkleinert werden.

Des Weiteren können Kosten gesenkt werden. Die zuvor beschriebenen Ausführungsformen können auch miteinander kombiniert werden, insbesondere einzelne Merkmale davon.

## Patentansprüche

1. Antriebsvorrichtung für ein Fahrzeugaggregat, wobei die Antriebsvorrichtung (10) ein Polgehäuse (12) aufweist, in welchem zumindest ein Teil des Antriebsmotors (14) angeordnet ist und ein Getriebegehäuse (16) in welchem eine Getriebeeinrichtung (18) angeordnet ist, die über den Antriebsmotor (14) antreibbar ist,
wobei wenigstens ein Teil des Getriebegehäuses (16) oder des Polgehäuses (12) und des Getriebegehäuses (16) eine metallische Abschirmung aufweist beziehungsweise aufweisen und der Antriebsmotor(14) ein Elektromotor ist, welcher einen Bürstenhalter (34) und Bürstenelemente aufweist, **dadurch gekennzeichnet, dass** der Bürstenhalter (34) und die Bürstenelemente in einer Aufnahme (36) in dem Getriebegehäuse (16) angeordnet sind, wobei die Aufnahme (36) als eine metallische Abschirmung ausgebildet ist, wobei die Aufnahme (36) an ihrer Ober- und/oder Unterseite mit einem Abdeckelement (42) abgedeckt ist, das aus Metall oder einer Metalllegierung besteht, wobei das Abdeckelement (42) wahlweise zusätzlich wenigstens ein oder mehrere elektronische Bauelemente (44) aufweist, beispielsweise einen Durchführungskondensator.

2. Antriebsvorrichtung nach Anspruch 1 , **dadurch gekennzeichnet, dass** das Getriebegehäuse (16) durch einen Getriebedeckel (30) abdeckbar ist, wobei der Getriebedeckel (30) aus Metall, einer Metalllegierung oder Kunststoff besteht oder dieses aufweist.

3. Antriebsvorrichtung nach Anspruch 2, **dadurch gekennzeichnet, dass** der Getriebedeckel (30) eine Aufnahme (46) aufweist zur Aufnahme einer Leiterplatte (48), wobei sich die Leiterplatte (48) beispielsweise zumindest teilweise über den Bürstenhalter (34) und die Bürstenelemente erstreckt, wobei wahlweise das Abdeckelement (42) zwischen der Leiterplatte (48) und dem Bürstenhalter (34) und den Bürstenelementen anordenbar ist.

4. Antriebsvorrichtung nach wenigstens einem der Ansprüche 2 bis 3, **dadurch gekennzeichnet, dass** der Getriebedeckel (30) wenigstens eine Steckeranbindung und/oder Buchsenanbindung aufweist.

5. Antriebsvorrichtung nach wenigstens einem der Ansprüche 1 bis 4, **dadurch gekennzeichnet, dass** das Getriebegehäuse (16) eine Aufnahme für die Getriebeeinrichtung (18) aufweist, wobei die Aufnahme und/oder im Wesentlichen das gesamte Getriebegehäuse (16) beispielsweise aus Metall oder einer Metalllegierung bestehen oder diese aufweisen.

6. Antriebsvorrichtung nach wenigstens einem der Ansprüche 1 bis 5, **dadurch gekennzeichnet, dass** die Antriebsvorrichtung (10) eine Frontscheibenwischervorrichtung und/oder eine Heckscheibenwischervorrichtung als Fahrzeugaggregat antreibt.

## Claims

1. Driving device for a vehicle unit, with the driving device (10) having a pole housing (12) in which at least a portion of the drive motor (14) is arranged, and a gear mechanism housing (16) in which a gear mechanism device (18) is arranged, it being possible for said gear mechanism device to be driven by means of the drive motor (14), with at least a portion of the gear mechanism housing (16) or of the pole housing (12) and of the gear mechanism housing (16) having a metal shield and the drive motor (14) being an electric motor which has a brush holder (34) and brush elements, **characterized in that** the brush holder (34) and the brush elements are arranged in a receptacle (36) in the gear mechanism housing (16), with the receptacle (36) being in the form of a metal shield, with the upper face and/or lower face of the receptacle (36) being covered by a covering element (42) which consists of metal or a metal alloy, with the covering element (42) optionally additionally having at least one or more electronic components (44), for example a feed-through capacitor.

2. Driving device according to Claim 1, **characterized in that** the gear mechanism housing (16) can be covered by a gear mechanism cover (30), with the gear mechanism cover (30) consisting of or containing metal, a metal alloy or plastic.

3. Driving device according to Claim 2, **characterized in that** the gear mechanism cover (30) has a receptacle (46) for accommodating a printed circuit board (48), with the printed circuit board (48) extending, for example, at least partially over the brush holder (34) and the brush elements, it selectively being possible for the covering element (42) to be arranged between the printed circuit board (48) and the brush holder (34) and the brush elements.

4. Driving device according to at least one of Claims 2 and 3, **characterized in that** the gear mechanism cover (30) has at least one plug connection and/or socket connection.

5. Driving device according to at least one of Claims 1 to 4, **characterized in that** the gear mechanism housing (16) has a receptacle for the gear mechanism device (18), with the receptacle and/or substantially the entire gear mechanism housing (16) consisting of or containing, for example, metal or a metal alloy.

6. Driving device according to at least one of Claims 1 to 5, **characterized in that** the driving device (10) drives a front windshield wiper device and/or a rear windscreen wiper device as the vehicle unit.

## Revendications

1. Dispositif d'entraînement pour un groupe d'un véhicule, dans lequel le dispositif d'entraînement (10) présente un boîtier polaire (12), dans lequel au moins une partie du moteur d'entraînement (14) est disposée et un boîtier de transmission (16) dans lequel est disposé un dispositif de transmission (18), qui peut être entraîné par le moteur d'entraînement (14),
dans lequel au moins une partie du boîtier de transmission (16) ou du boîtier polaire (12) et du boîtier de transmission (16) présente ou présentent un blindage métallique et le moteur d'entraînement (14) est un moteur électrique, qui présente un porte-balais (34) et des éléments de balais,
**caractérisé en ce que** le porte-balais (34) et les éléments de balais sont disposés dans un logement (36) dans le boîtier de transmission (16), dans lequel le logement (36) est réalisé sous la forme d'un blindage métallique, dans lequel le logement (36) est recouvert sur son côté supérieur et/ou inférieur avec un élément de couverture (42), qui se compose de métal ou d'un alliage métallique, dans lequel l'élément de couverture (42) présente au choix en outre au moins un ou plusieurs composant(s) électronique(s) (44), par exemple un condensateur de traversée.

2. Dispositif d'entraînement selon la revendication 1, **caractérisé en ce que** le boîtier de transmission (16) peut être recouvert par un couvercle de transmission (30), dans lequel le couvercle de transmission (30) se compose de métal, d'un alliage métallique ou de matière plastique, ou en présente.

3. Dispositif de transmission selon la revendication 2, **caractérisé en ce que** le couvercle de transmission (30) présente un logement (46) destiné à recevoir une plaquette de circuits imprimés (48), dans lequel la plaquette de circuits imprimés (48) s'étend par exemple au moins en partie au-dessus du porte-balais (34) et des éléments de balais, dans lequel l'élément de couverture (42) peut au choix être disposé entre la plaquette de circuits imprimés (48) et le porte-balais (34) et les éléments de balais.

4. Dispositif d'entraînement selon au moins une des revendications 2 à 3, **caractérisé en ce que** le couvercle de transmission (30) présente au moins une connexion par fiche et/ou une connexion par douille.

5. Dispositif d'entraînement selon au moins une des revendications 1 à 4, **caractérisé en ce que** le boîtier de transmission (16) présente un logement pour le dispositif de transmission (18), dans lequel le logement et/ou essentiellement tout le boîtier de transmission (16) se compose par exemple de métal ou d'un alliage métallique ou en présente.

6. Dispositif d'entraînement selon au moins une des revendications 1 à 5, **caractérisé en ce que** le dispositif d'entraînement (10) entraîne un dispositif d'essuie-glace de pare-brise et/ou un dispositif d'essuie-glace de lunette arrière comme groupe du véhicule.
